# DEMANDE DE BREVET EUROPEEN

(11) **EP 1 729 478 A1**
(43) Date de publication de la demande: **06.12.2006**
(21) Numéro de dépôt: 06114609.8
(22) Date de dépôt: 29.05.2006
(51) Int. Cl.: H04L 29/06

(54) **Procédé d'etablissement d'appel entre un terminal appelant et un terminal appelé**

(30) Priorité: 31.05.2005 FR 0551418
(71) Demandeur: ALCATEL, 75008 Paris (FR)
(72) Inventeur: Pelous, Marc, 75015, Paris (FR); Le Gall, Jean-Christophe M., 44119, Treillieres (FR)
(74) Mandataire: Vigand, Régis Louis Michel

(57) **Abrégé**

L'invention concerne le domaine des procédés d'établissement d'appel entre un terminal appelant (UEA) et un terminal appelé (UEB). C'est un procédé d'établissement d'appel vidéo entre un terminal appelant et un terminal appelé, au travers d'un réseau de télécommunications, comprenant : une étape de demande d'établissement d'appel (SETUP) entre le terminal appelant et le terminal appelé ; une étape d'alerte (ALERTING) indiquant que le terminal appelé a été alerté ; une étape de connexion (CONNECT) indiquant que le terminal appelé a été décroché ; une étape de négociation d'établissement de canaux logiques vidéo et audio entre le terminal appelant et le terminal appelé ; le début de l'étape de négociation est situé à la fois après le début de l'étape d'alerte et avant le début de l'étape de connexion.

## Description

L'invention concerne le domaine des procédés d'établissement d'appel entre un terminal appelant et un terminal appelé. Après une phase d'établissement réussie, ces procédés nécessitent une négociation de bout en bout, traitée par les terminaux et non pas par les noeuds intermédiaires. L'invention concerne plus particulièrement le domaine des appels vidéo. Pour permettre l'établissement d'un appel vidéo, il faut établir une connexion et des canaux logiques vidéo et audio entre le terminal appelant et le terminal appelé.

De manière classique, la négociation de l'établissement des canaux logiques vidéo et audio débute une fois la connexion établie entre les terminaux. Mais cette procédure classique présente notamment deux inconvénients. D'une part, le temps d'établissement de l'appel vidéo est relativement long. D'autre part le temps pendant lequel l'établissement des canaux logiques est effectué est taxé aux utilisateurs puisque cet établissement est effectué après l'établissement de la connexion entre les terminaux des utilisateurs.

Il serait donc intéressant de pouvoir établir les canaux logiques, ou au moins de pouvoir commencer à établir les canaux logiques, avant que la connexion entre les terminaux des utilisateurs ne soit elle-même établie. Aucun nouveau message, par rapport à la procédure classique existante, n'est nécessaire. Toutefois, le comportement des terminaux doit être adapté dans la mesure où au lieu d'attendre l'établissement de la connexion, les terminaux doivent commencer la négociation de l'établissement des canaux logiques avant l'établissement, entre eux, de la connexion.

Selon un art antérieur, décrit dans la demande de brevet américaine US2004/0174817 au niveau de la méthode type III, la négociation de l'établissement des canaux logiques entre les terminaux est effectuée avant l'établissement de la connexion entre les terminaux. Cette négociation est effectuée pendant l'étape de demande d'établissement d'appel, avant que le terminal appelé soit alerté, et nécessite pour cela l'utilisation d'une information utilisateur vers utilisateur. D'une part cette information utilisateur vers utilisateur est optionnelle, car elle n'est pas présente dans tout type de réseau, et elle est en particulier absente des réseaux de type circuit (par opposition aux réseaux de type paquet). En effet, dans les réseaux de type circuit, les opérateurs s'arrangent pour que cette information ne circule pas, notamment pour des raisons financières. D'autre part l'utilisation de cette information se révèle relativement complexe dans la mesure où elle impose au terminal d'intégrer un élément supplémentaire dans l'étape de demande d'établissement d'appel. Par ailleurs, l'utilisation de cette information nécessite de normaliser un ensemble de profiles prédéfinis ce qui induit une limitation au niveau du nombre de combinaisons possibles des paramètres définis dans les profils, laquelle limitation peut devenir gênante lors de l'extension du nombre de codecs (abbréviation de codeur-décodeur) disponibles.

Pour améliorer les inconvénients précités, l'invention propose de s'affranchir du besoin de cette information utilisateur vers utilisateur pour débuter la négociation de l'établissement des canaux logiques. Pour cela, l'invention propose de débuter la négociation de l'établissement des canaux logiques une fois que le terminal appelé a été alerté. Ainsi la négociation de l'établissement des canaux logiques peut débuter avant l'établissement de la connexion entre les terminaux de manière plus simple et plus efficace sans avoir besoin d'utiliser cette information utilisateur vers utilisateur.

L'invention concerne un procédé d'établissement d'appel vidéo entre un terminal appelant et un terminal appelé. L'invention concerne également un type de terminal appelant spécialement adapté à la mise en oeuvre du procédé d'établissement d'appel vidéo selon l'invention ainsi qu'un type de terminal appelé spécialement adapté à la mise en oeuvre du procédé d'établissement d'appel vidéo selon l'invention.

Selon l'invention, il est prévu un procédé d'établissement d'appel vidéo entre un terminal appelant et un terminal appelé, au travers d'un réseau de télécommunications, comprenant : une étape de demande d'établissement d'appel entre le terminal appelant et le terminal appelé ; une étape d'alerte indiquant que le terminal appelé a été alerté ; une étape de connexion indiquant que le terminal appelé a été décroché ; une étape de négociation d'établissement de canaux logiques vidéo et audio entre le terminal appelant et le terminal appelé ; caractérisé en ce que le début de l'étape de négociation est situé à la fois après le début de l'étape d'alerte et avant le début de l'étape de connexion. De préférence, le début de l'étape de négociation est situé après la fin de l'étape d'alerte.

Selon l'invention, il est aussi prévu un terminal appelant apte : à émettre un message de demande d'établissement d'appel; à recevoir un message d'alerte indiquant qu'un terminal appelé a été alerté; à recevoir un message de connexion indiquant qu'un terminal appelé a été décroché ; à négocier avec un terminal appelé d'une part l'établissement d'un canal de signalisation et d'autre part l'établissement d'un multiplexage pour le canal de signalisation et des canaux logiques vidéo et audio ; caractérisé en ce que ledit terminal appelant comprend des moyens pour commencer à négocier après avoir reçu le message d'alerte mais avant de recevoir le message de connexion.

Selon l'invention, il est également prévu un terminal appelé apte : à recevoir un message de demande d'établissement d'appel ; à émettre un message d'alerte indiquant que ledit terminal appelé a été alerté ; à émettre un message de connexion indiquant que ledit terminal appelé a été décroché ; à négocier avec un terminal appelant d'une part l'établissement d'un canal de signalisation et d'autre part l'établissement d'un multiplexage pour le canal de signalisation et des canaux logiques vidéo et audio ; caractérisé en ce que ledit terminal appelé comprend des moyens pour commencer à négocier après avoir émis le message d'alerte mais avant d'émettre le message de connexion.

L'invention sera mieux comprise et d'autres particularités et avantages apparaîtront à l'aide de la description ci-après et des dessins joints, donnés à titre d'exemples, où :
- la figure 1 représente schématiquement un exemple de système comprenant deux terminaux ainsi qu'une partie du réseau de télécommunications au travers duquel les terminaux peuvent communiquer entre eux ;
- la figure 2 représente schématiquement un exemple de procédé d'établissement d'appel vidéo selon l'invention.

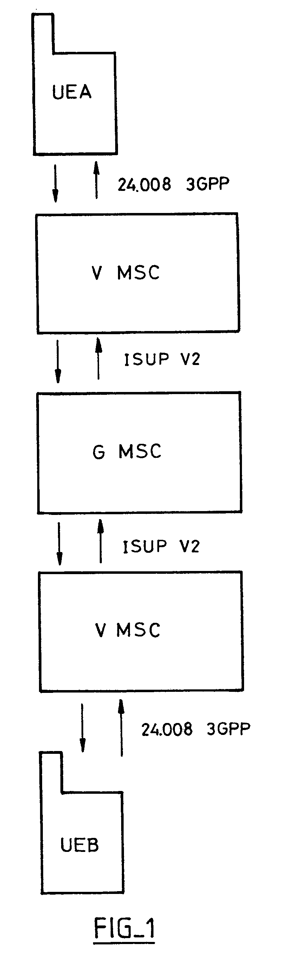

La figure 1 représente schématiquement un exemple de système comprenant deux terminaux ainsi qu'une partie du réseau de télécommunications au travers duquel les terminaux peuvent communiquer entre eux. Le réseau de télécommunications comprend un commutateur passerelle de type GMSC (pour « Gateway Mobile Switching Center » en langue anglaise), noté dans la suite commutateur passerelle GMSC, des commutateurs locaux de type VMSC (pour « Visited Mobile Switching Center » en langue anglaise), notés dans la suite commutateurs locaux VMSC, des terminaux parmi lesquels un terminal appelant noté UEA et un terminal appelé noté UEB. L'un des commutateurs locaux VMSC est relié au terminal appelant UEA tandis que l'autre commutateur local VMSC est relié au terminal appelé UEB. La communication bidirectionnelle entre un terminal et un commutateur local VMSC est conforme à la norme 24.008 3GPP. La communication bidirectionnelle entre un commutateur passerelle GMSC et un commutateur local VMSC est conforme à la norme ISUP V2.

De préférence, le réseau de télécommunications est un réseau circuit, c'est-à-dire de type circuit, dans lequel l'information utilisateur vers utilisateur est éliminée par les opérateurs, et dans lequel est par exemple utilisé le protocole ITU H 324 pour les communications vidéo entre utilisateurs, et non pas un réseau paquet, c'est-à-dire de type paquet, dans lequel l'information utilisateur vers utilisateur est présente et plus facilement utilisable, et dans lequel est par exemple utilisé le protocole ITU H 323 pour les communications vidéo entre utilisateurs. De manière avantageuse, le réseau de télécommunications est au moins de la troisième génération, c'est-à-dire qu'il est de troisième génération ou d'une génération suivante.

De préférence, dans le procédé d'établissement d'appel vidéo entre un terminal appelant et un terminal appelé selon l'invention, l'étape de demande d'établissement d'appel s'étend entre l'émission, par le terminal appelant, d'un message de demande d'établissement d'appel, et la réception, par le terminal appelé, d'un message de demande d'établissement d'appel, l'étape d'alerte s'étend entre l'émission, par le terminal appelé, d'un message d'alerte indiquant que le terminal appelé a été alerté, et la réception, par le terminal appelant, d'un message d'alerte indiquant que le terminal appelé a été alerté, l'étape de connexion s'étend entre l'émission, par le terminal appelé, d'un message de connexion indiquant que le terminal appelé a été décroché, et la réception, par le terminal appelant, d'un message de connexion indiquant que le terminal appelé a été décroché.

De préférence, dans le procédé, selon l'invention, d'établissement d'appel vidéo entre un terminal appelant et un terminal appelé, l'étape de négociation comprend d'une part l'établissement d'un canal de signalisation et d'autre part l'établissement d'un multiplexage pour le canal de signalisation et les canaux logiques vidéo et audio. Cette étape de négociation prend généralement quelques secondes, elle présente une durée typiquement de l'ordre de 5 à 10 secondes. Par conséquent, le temps gagné, à chaque communication entre un terminal appelant et un terminal appelé, par la mise en oeuvre du procédé selon l'invention, est au plus la durée de l'étape de négociation, mais une partie seulement de cette durée si l'utilisateur du terminal appelé décroche rapidement, c'est-à-dire avant la fin de l'étape de négociation

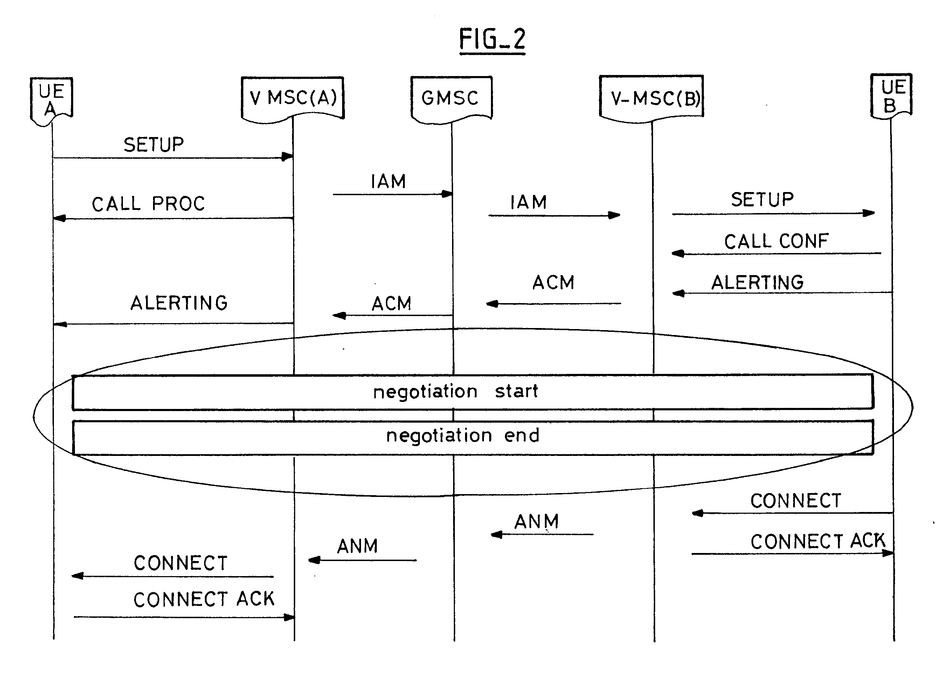

La figure 2 représente schématiquement un exemple de procédé d'établissement d'appel vidéo selon l'invention. La communication bidirectionnelle entre un terminal et un commutateur local VMSC est conforme à la norme 24.008 3GPP. La communication bidirectionnelle entre un commutateur passerelle GMSC et un commutateur local VMSC est conforme à la norme ISUP V2. De préférence, la communication vidéo entre les terminaux se déroule conformément au protocole ITU H 324, incorporé ici par référence, en liaison avec lequel la figure 2 sera décrite et auquel il est fait référence pour la signification précise et la nomenclature exacte des messages. Le procédé d'établissement d'appel vidéo entre un terminal appelant et un terminal appelé est alors conforme au protocole ITU H 324. L'étape de demande d'établissement d'appel est une étape SETUP. L'étape d'alerte est une étape ALERTING.L'étape de connexion est une étape CONNECT. L'étape de négociation est conforme d'une part au protocole ITU H 245 pour l'établissement d'un canal de signalisation et d'autre part au protocole ITU H 223 pour l'établissement d'un multiplexage pour le canal de signalisation et les canaux logiques vidéo et audio.

Pour la description des différents échanges de messages, le commutateur local relié au terminal appelant UEA sera noté commutateur local VMSC(A) tandis que le commutateur local relié au terminal appelé UEB sera noté commutateur local VMSC(B). Il est supposé que le support de communication est ouvert entre les terminaux dans les deux sens, c'est-à-dire de manière à permettre une transmission des messages qui soit bidirectionnelle, c'est-à-dire du terminal appelant vers le terminal appelé et du terminal appelé vers le terminal appelant.

Le terminal appelant UEA envoie au commutateur local VMSC(A) un message SETUP par lequel il a l'initiative de la demande d'établissement d'appel. Le commutateur local VMSC(A) envoie d'une part au terminal appelant UEA un message CALL PROC par lequel il accuse réception de la demande du terminal appelant et d'autre part au commutateur passerelle GMSC un message IAM par lequel il transmet la demande du terminal appelant. Le commutateur passerelle GMSC envoie au commutateur local VMSC(B) un message IAM par lequel il transmet la demande du terminal appelant. Le commutateur local VMSC(B) envoie au terminal appelé UEB un message SETUP par lequel il transmet la demande du terminal appelant.

Le terminal appelé UEB envoie au commutateur local VMSC(B) d'une part un message CALL CONF par lequel il accuse réception auprès du commutateur local VMSC(B) de la demande du terminal appelant et d'autre part un message ALERTING à destination du terminal appelant UEA par lequel le terminal appelé UEB signale qu'il a bien été alerté par la demande du terminal appelant. Le commutateur local VMSC(B) envoie au commutateur passerelle GMSC un message ACM par lequel il transmet l'alerte du terminal appelé. Le commutateur passerelle GMSC envoie au commutateur local VMSC(A) un message ACM par lequel il transmet l'alerte du terminal appelé. Le commutateur local VMSC(A) envoie au terminal appelant UEA un message ALERTING par lequel il transmet l'alerte du terminal appelé.

L'étape de négociation des canaux logiques entre les terminaux, qui s'effectue conformément aux protocoles ITU H 245 et ITU H 223, incorporés ici par référence, débute, ce qui est noté par la ligne « negotiation start ». La fin de cette étape de négociation est notée par la ligne « negotiation end ».

Le terminal appelé UEB envoie au commutateur local VMSC(B) d'une part un message CONNECT par lequel il signale au commutateur local VMSC(B) que l'utilisateur du terminal appelé UEB a décroché. Le fait de signaler que l'utilisateur du terminal UEB a décroché sera noté par la suite la signalisation de la réaction de l'utilisateur appelé. Le commutateur local VMSC(B) envoie d'une part au terminal appelé UEB un message CONNECT ACK par lequel il accuse réception de la signalisation de la réaction de l'utilisateur appelé et d'autre part au commutateur passerelle GMSC un message ANM par lequel il transmet la signalisation de la réaction de l'utilisateur appelé. Le commutateur passerelle GMSC envoie au commutateur local VMSC(A) un message ANM par lequel il transmet la signalisation de la réaction de l'utilisateur appelé. Le commutateur local VMSC(A) envoie au terminal appelant UEA un message CONNECT par lequel il transmet la signalisation de la réaction de l'utilisateur appelé. Le terminal appelant UEA envoie au commutateur local VMSC(A) un message CONNECT ACK par lequel il accuse réception de la signalisation de la réaction de l'utilisateur appelé.

Le début de l'étape de négociation de l'établissement des canaux logiques entre les terminaux, noté « negotiation start », se situe entre d'une part l'envoi, par le terminal appelé UEB, du message ALERTING, et d'autre part l'envoi, par le terminal appelé UEB, du message CONNECT. Le début de cette étape de négociation peut se situer avant ou de préférence après la réception, par le terminal appelant UEA, du message ALERTING. La fin de cette étape de négociation, notée « negotiation end » peut se situer avant comme après l'envoi, par le terminal appelé UEB, du message CONNECT, selon la rapidité de réaction de l'utilisateur appelé, c'est-à-dire selon le moment où l'utilisateur du terminal appelé UEB décroche.

Du côté du terminal appelant UEA, l'étape de négociation de l'établissement des canaux logiques débute juste après la réception du message ALERTING. Du côté du terminal appelé UEB, l'étape de négociation de l'établissement des canaux logiques débute, soit juste après l'envoi du message ALERTING, soit lorsque le terminal appelé UEB détecte que le terminal appelant a débuté l'étape de négociation de l'établissement des canaux logiques et par exemple essaye d'établir le multiplexage. Si l'utilisateur appelé décroche avant que l'étape de négociation de l'établissement des canaux logiques soit achevée, cette étape de négociation de l'établissement des canaux logiques se poursuit normalement comme si l'utilisateur appelé n'avait pas décroché.

Ce procédé d'établissement d'appel vidéo selon l'invention présente aussi l'avantage d'être compatible avec une procédure de repli de la vidéo vers l'audio, conformément au standard SCUDIF. C'est intéressant dans le cas où le terminal appelé ne supporte que l'audio, ne pouvant pas supporter la vidéo.

Ce procédé d'établissement d'appel vidéo selon l'invention, qui se caractérise notamment par un début anticipé de l'étape de négociation de l'établissement de canaux logiques, n'est pas appliqué lorsque le terminal appelant détecte, de la part du terminal appelé, la mise en oeuvre d'un mécanisme de renvoi, par exemple vers une boîte vidéo en cas d'absence de l'utilisateur appelé. Le mécanisme de renvoi classique est utilisable par le terminal appelé, il nécessite seulement une réaction appropriée de la part du terminal appelant.

De préférence, dans le procédé d'établissement d'appel vidéo entre un terminal appelant et un terminal appelé selon l'invention, lors d'un renvoi du terminal appelé vers un terminal de renvoi, une nouvelle étape de négociation d'établissement de canaux logiques vidéo et audio entre le terminal appelant et le terminal de renvoi ne débute qu'après le début de l'étape de connexion entre le terminal appelant et le terminal de renvoi.

Lorsque le mécanisme de renvoi des appels vers un terminal de renvoi supportant la vidéo, par exemple la boîte vidéo associée au terminal appelé, est activé par le terminal appelé, le terminal appelant va alors détecter la mise en oeuvre de ce mécanisme de renvoi. Le terminal appelant va alors fermer les canaux logiques qu'il avait ouverts ou commencé à ouvrir avec le terminal appelé.

Le terminal appelant a notamment deux manières de détecter ce mécanisme de renvoi. Selon la première manière, le terminal appelant le détecte grâce à un temporisateur tandis que selon la deuxième manière, le terminal appelant le détecte grâce à la réception d'un message lui signalant le renvoi. Dans un cas comme dans l'autre, le terminal appelant ferme les canaux logiques qu'il avait ouverts ou commencé à ouvrir avec le terminal appelé. La nouvelle négociation de canaux logiques avec le terminal de renvoi ne commencera alors qu'après réception d'un message signalant que la connexion est établie entre le terminal appelant et le terminal de renvoi.

## Revendications

1. Procédé d'établissement d'appel vidéo entre un terminal appelant (UEA) et un terminal appelé (UEB), au travers d'un réseau de télécommunications, comprenant :
- une étape de demande d'établissement d'appel entre le terminal appelant et le terminal appelé ;
- une étape d'alerte indiquant que le terminal appelé a été alerté ;
- une étape de connexion indiquant que le terminal appelé a été décroché ;
- une étape de négociation d'établissement de canaux logiques vidéo et audio entre le terminal appelant et le terminal appelé ;
**caractérisé en ce que** le début de l'étape de négociation est situé à la fois après le début de l'étape d'alerte et avant le début de l'étape de connexion.

2. Procédé d'établissement d'appel vidéo entre un terminal appelant et un terminal appelé selon la revendication 1, **caractérisé en ce que** le début de l'étape de négociation est situé après la fin de l'étape d'alerte.

3. Procédé d'établissement d'appel vidéo entre un terminal appelant et un terminal appelé selon l'une quelconque des revendications précédentes, **caractérisé en ce que** le réseau de télécommunications est un réseau circuit de troisième génération ou d'une génération suivante.

4. Procédé d'établissement d'appel vidéo entre un terminal appelant et un terminal appelé selon l'une quelconque des revendications précédentes, **caractérisé en ce que** :
- l'étape de demande d'établissement d'appel s'étend entre l'émission, par le terminal appelant, d'un message (SETUP) de demande d'établissement d'appel, et la réception, par le terminal appelé, d'un message (SETUP) de demande d'établissement d'appel ;
- l'étape d'alerte s'étend entre l'émission, par le terminal appelé, d'un message d'alerte (ALERTING) indiquant que le terminal appelé a été alerté, et la réception, par le terminal appelant, d'un message d'alerte (ALERTING) indiquant que le terminal appelé a été alerté ;
- l'étape de connexion s'étend entre l'émission, par le terminal appelé, d'un message de connexion (CONNECT) indiquant que le terminal appelé a été décroché, et la réception, par le terminal appelant, d'un message de connexion (CONNECT) indiquant que le terminal appelé a été décroché.

5. Procédé d'établissement d'appel vidéo entre un terminal appelant et un terminal appelé selon l'une quelconque des revendications précédentes, **caractérisé en ce que** l'étape de négociation comprend d'une part l'établissement d'un canal de signalisation et d'autre part l'établissement d'un multiplexage pour le canal de signalisation et les canaux logiques vidéo et audio.

6. Procédé d'établissement d'appel vidéo entre un terminal appelant et un terminal appelé selon l'une quelconque des revendications précédentes, **caractérisé en ce que** :
- ledit procédé est conforme au protocole ITU H 324 ;
- l'étape de demande d'établissement d'appel est une étape SETUP ;
- l'étape d'alerte est une étape ALERTING ;
- l'étape de connexion est une étape CONNECT ;
- l'étape de négociation est conforme d'une part au protocole ITU H 245 pour l'établissement d'un canal de signalisation et d'autre part au protocole ITU H 223 pour l'établissement d'un multiplexage pour le canal de signalisation et les canaux logiques vidéo et audio.

7. Procédé d'établissement d'appel vidéo entre un terminal appelant et un terminal appelé selon l'une quelconque des revendications précédentes, **caractérisé en ce que** lors d'un renvoi du terminal appelé vers un terminal de renvoi, une nouvelle étape de négociation d'établissement de canaux logiques vidéo et audio entre le terminal appelant et le terminal de renvoi ne débute qu'après le début de l'étape de connexion entre le terminal appelant et le terminal de renvoi.

8. Terminal appelant apte :
- à émettre un message de demande d'établissement d'appel (SETUP) ;
- à recevoir un message d'alerte (ALERTING) indiquant qu'un terminal appelé a été alerté ;
- à recevoir un message de connexion (CONNECT) indiquant qu'un terminal appelé a été décroché ;
- à négocier avec un terminal appelé d'une part l'établissement d'un canal de signalisation et d'autre part l'établissement d'un multiplexage pour le canal de signalisation et des canaux logiques vidéo et audio ;
**caractérisé en ce que** ledit terminal appelant comprend des moyens pour commencer à négocier après avoir reçu le message d'alerte mais avant de recevoir le message de connexion.

9. Terminal appelé apte :
- à recevoir un message de demande d'établissement d'appel (SETUP) ;
- à émettre un message d'alerte (ALERTING) indiquant que ledit terminal appelé a été alerté ;
- à émettre un message de connexion (CONNECT) indiquant que ledit terminal appelé a été décroché ;
- à négocier avec un terminal appelant d'une part l'établissement d'un canal de signalisation et d'autre part l'établissement d'un multiplexage pour le canal de signalisation et des canaux logiques vidéo et audio ;
**caractérisé en ce que** ledit terminal appelé comprend des moyens pour commencer à négocier après avoir émis le message d'alerte mais avant d'émettre le message de connexion.
